(19) Europäisches Patentamt
European Patent Office
Office européen des brevets

(11) **EP 2 691 756 B1**

(12) **EUROPÄISCHE PATENTSCHRIFT**

(45) Veröffentlichungstag und Bekanntmachung des Hinweises auf die Patenterteilung:
**14.10.2015 Patentblatt 2015/42**

(21) Anmeldenummer: **12729095.5**

(22) Anmeldetag: **11.06.2012**

(51) Int Cl.:
*G01F 15/075* (2006.01)        *G01N 35/00* (2006.01)
*E03B 7/00* (2006.01)          *F17D 5/02* (2006.01)
*G01M 3/28* (2006.01)

(86) Internationale Anmeldenummer:
**PCT/EP2012/060963**

(87) Internationale Veröffentlichungsnummer:
**WO 2013/000686 (03.01.2013 Gazette 2013/01)**

(54) **LECKAGEERKENNUNG MITTELS STOCHASTISCHER MASSENBILANZ**

LEAK DETECTION BY MEANS OF A STOCHASTIC MASS BALANCE

DÉTECTION DE FUITES PAR BILAN MASSIQUE STOCHASTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.06.2011 DE 102011078240**

(43) Veröffentlichungstag der Anmeldung:
**05.02.2014 Patentblatt 2014/06**

(73) Patentinhaber: **Siemens Aktiengesellschaft
80333 München (DE)**

(72) Erfinder:
• **HANSS, Holger
76726 Germersheim (DE)**
• **MAJEWSKI, Kurt
81541 München (DE)**
• **ROSEN, Roland
82211 Herrsching (DE)**
• **WEHRSTEDT, Jan, Christoph
81829 München (DE)**

(56) Entgegenhaltungen:
**US-A1- 2009 007 968      US-A1- 2009 066 524
US-A1- 2009 299 660      US-B1- 7 920 983**

EP 2 691 756 B1

**Beschreibung**

Die vorliegende Erfindung betrifft ein Verfahren und eine Vorrichtung zur Leckageerkennung in einem Gebiet eines Versorgungsnetzes, sowie eine Verwendung eines entsprechenden Verfahrens in einem Versorgungsnetz.

Trinkwasser gehört mittlerweile zu einem der wichtigsten Güter im einundzwanzigsten Jahrhundert. In Wasserverteilungsnetzen treten aber teilweise erhebliche Wasserverluste auf.

Die Bewahrung dieses Gutes stellt eine große Herausforderung an die Leckerkennung und- Ortung in Wassernetzwerken dar. Das Erkennen von Wasserverlusten durch eine Massenbilanz, bei dem alle Einspeisemengen und insbesondere die Wasserabnahmemengen aller individuellen Wasserverbraucher gemessen werden, überschreitet vom Aufwand die Grenzen der Machbarkeit. Des Weiteren erschweren Gesetzeslagen zeitgenaue Verbrauchsmessungen und Verbrauchsaufzeichnungen aller Kundendaten.

Herkömmlicher Weise wird zur Detektion von Leckagen in Wassernetzwerken lediglich die gesamte Wassermenge, die ins Netzwerk fließt, zu einer bestimmten Zeit, wie dies beispielsweise der Zeitraum nachts zwischen 2 und 4 Uhr ist, gemessen. Diese Werte erzeugen eine Zeitreihe, die darauf hin analysiert wird, ob ein plötzlicher Anstieg des Verbrauchs und somit eine mögliche Leckage vorliegt. Eine Bilanzierung der Abnahmen des Systems ist herkömmlicher Weise nicht möglich. Es liegen Faustformeln zum typischen Wasserverbrauch bestimmter Konsumenten vor. Diese sind aber zum einen sehr allgemein und können, insbesondere zeitlich befristete, Sondereffekte nicht hinreichend genau berücksichtigen.

Die meist sehr großen Wasserversorgungsnetze werden üblicherweise in Wasserversorgungszonen unterteilt. Diese Zonen werden wiederum in Subzonen unterteilt, die, da dies durch britische Ingenieure geprägt ist, als district meter area (DMA) bezeichnet werden. Die DMAs werden so angelegt, dass diese nur einen Zufluss haben, dessen Durchfluss gemessen wird. Aus der Beobachtung dieser Durchflussmessung wird auf Unregelmäßigkeiten im Wasserverbrauch und somit auf Leckagen geschlossen. Konkret wird herkömmlicher Weise eine so genannte "night flow analysis" durchgeführt. Hierbei wird durch detaillierte Aufzeichnung der nächtlichen Zuflusswerte in eine DMA (z.B. alle 5 Sekunden zwischen 2:00 - 4:00 Uhr) ein minimaler Zuflusswert bestimmt, hier auch als Hintergrundverbrauch bezeichnet, der den normalen nächtlichen (Mindest-)Verbrauch und vorhandene (insbesondere auch kleine) Leckagen umfasst.

Auf Basis dieser minimalen Zuflusswerte in eine DMA während verbrauchsarmer Nachtzeiten, beispielsweise zwischen 2 und 4 Uhr, wobei dann lediglich ein Wert pro Nacht bereit gestellt wird, wird über Tage und Wochen hinweg eine Zeitreihe erstellt. Der, insbesondere plötzliche, Anstieg dieser minimalen Verbrauchswerte, der beispielsweise durch eine Schwellwertüberschreitung erkannt werden kann, kann als Ursache eine neue Leckage haben.

Zur Lokalisation oder Leckageortung wird zumeist ein Step Test durchgeführt. Hierzu trennt man zu Zeiten niedrigen Verbrauchs sukzessiv kleine Bereiche von der DMA und beobachtet die Veränderung des Verbrauchs. Bereiche, die zu einem starken unerklärlichen Abfall des Verbrauchs führen untersucht man dann weiter auf Leckagen.

Alternativ kann mit Geräuschmessern vor Ort das Wassersystem auf Leckagen abgehört werden und durch Betrachtung der Geräuschkorrelation die Leckagestelle berechnet werden.

Beide genannte herkömmliche Verfahren eigenen sich nicht für eine permanente Überwachung. Step Tests sind mit einem hohen Aufwand verbunden, indem die betroffenen Haushalte von der Abschaltung informiert werden müssen und eine Ersatzversorgung sichergestellt werden muss. Geräuschemessung benötigt einen hohen Aufwand, da die Messungen nur von Spezialisten vor Ort durchgeführt werden können. Außerdem sind diese Untersuchungen immer nur lokal möglich. Zusätzlich können beide herkömmliche Verfahren nur in Zeiten mit einem niedrigen Verbrauch angewendet werden, damit die Messungen nicht durch Verbrauchsschwankungen zu sehr gestört werden.

Die US-Patentschrift US 7 920 983 B1 (PELEG AMIR [IL] ET AL) 5. April 2011 (2011-04-05) offenbart ein Computergestütztes Verfahren zur Leckageerkennung in einem Gebiet eines Versorgungsnetzes mit den Schritten:

- Installation von Sensoren zur Bestimmung des Durchflusses oder des Wasserdruckes innerhalb des Gebietes,
- Bestimmen des Wasserverbrauches für das Gebiet innerhalb einer oder mehrerer festgelegter Messperioden durch die Messwerten der Sensoren innerhalb des Gebietes,
- Abbilden der Topologie des Versorgungsnetzes in einem hydraulischen Simulator und Erstellen eines hydraulischen Simulationsmodells für das Gebiet,
- Bestimmen der Verbräuche innerhalb des Gebietes an hand der Simulationsmoddels und
- Bestimmen, ob eine Leckage vorliegt durch Vergleich der durch Verbräuche innerhalb des Gebietes an hand der Simulationsmodels mit den von den Sensoren innerhalb des Gebietes gelieferten Messwerten.

Es ist Aufgabe der vorliegenden Erfindung ein Verfahren und eine Vorrichtung zur Leckageerkennung in einem Gebiet eines Versorgungsnetzes bereitzustellen, wobei mit einer hohen Wahrscheinlichkeit Leckagen im Versorgungsnetz erkannt werden.

Die Aufgabe wird gelöst durch ein computergestütztes Verfahren zur Leckageerkennung in einem Gebiet (DMA) eines Versorgungsnetzes mit den Schritten:

a) Stationäres Installieren von Durchflussmessgeräten an Zu- und Abflüssen des Gebietes (DMA);

b) Installation von Sensoren zur Bestimmung des Durchflusses oder des Wasserdruckes innerhalb des Gebietes (DMA);

c) Bestimmen des Wasserverbrauches für das Gebiet (DMA) innerhalb einer oder mehrerer festgelegter Messperioden durch die Durchflussmessgeräte an den Zu- und Abflüssen und den Messwerten der Sensoren innerhalb des Gebietes (DMA);

d) Abbilden der Topologie des Versorgungsnetzes in einem hydraulischen Simulator und Erstellen eines hydraulischen Simulationsmodells für das Gebiet (DMA);

e) Bestimmen der Verbräuche innerhalb des Gebietes (DMA) durch zufällige Festlegung anhand der Verbrauchsprofile und den Zu- und Abflüssen des Gebietes (DMA);

f) Berechnung des Fließ- und Druckverhaltens im Versorgungsnetz innerhalb einer der festgelegten Messperioden durch Monte-Carlo-Simulation; und

g) Bestimmen, ob eine Leckage vorliegt durch Vergleich der durch die Monte-Carlo-Simulation ermittelten Ergebnisse mit den von den Sensoren innerhalb des Gebietes (DMA) gelieferten Messwerten.

In dem Verfahren wird unterschieden zwischen Durchflusssensoren an den Zu- und Abflüssen und Sensoren innerhalb des Gebietes. Während die Messwerte der Zu- und Abflusssensoren den Wasserverbrauch des Gebietes beschreiben und daher im hydraulischen Modell Verwendung finden, werden die Messwerte der inneren Sensoren zur Feststellung von Abweichungen von Modell und Realität, und damit zur Leckageerkennung eingesetzt. Die Betrachtung von mehreren Messintervallen kompensiert ein zufälliges atypisches Verbraucherverhalten, damit dieses nicht überbewertet wird. Das Verfahren lässt sich leicht automatisieren (durch den Einsatz von Computern und entsprechender Software) und zusammen mit anderen jedes Gebiet separat betrachtende Verfahren (z.B. Kameraüberwachung, Drucksensorik) betreiben. Auch können dynamische, nicht periodische Sondereffekte (z.B. höherer Wasserverbrauch bei Sportveranstaltungen im Fernsehen) berücksichtigt werden, wodurch auch die Fehlalarmrate weiterhin gesenkt wird. Das Verfahren ist auch anwendbar für Gebiete in denen die night-flow-Analyse nicht anwendbar ist, da auch nachts hohe Verbräuche auftreten, z.B. in Großstädten (Mega Cities).

Eine erste vorteilhafte Ausgestaltung der Erfindung liegt darin, dass es sich bei den Gebieten (DMA) auch um Virtuelle District Meter Areas handeln kann. Bei virtuellen Zonen oder sog. virtuellen district meter areas (DMA) handelt es sich um Teilgebiete eines Netzes, deren Zuflüsse und Abflüsse mittels Durchflussmesser gemessen werden, wobei nicht gefordert wird, dass die Gebiete disjunkt sind. Es erfolgt eine sukzessive Auswertung der Zeitreihen für alle Gebiete und Erkennen von Leckagen in den Gebieten. Abschließend erfolgt ein Eingrenzen des Ortes der Leckage anhand der Leckageinformationen für die einzelnen Gebiete. Eine Leckageinformation ist eine Information darüber, ob in dem Gebiet eine Leckage erkannt wurde, oder nicht. Virtuelle district meter areas (virtuelle DMAs) unterscheiden sich von herkömmlichen Gebieten (DMAs) folgendermaßen. Bei der Unterteilung von Zonen in DMAs wurde herkömmlicher Weise stets versucht, diese so zu bilden, das sich lediglich ein Zufluss bzw. ein Zuflussrohr ergab und dieses über einen einzigen Sensor überwacht werden kann. In den Versorgungszonen werden an ausgewählten Stellen zusätzliche Durchflusssensoren so eingebaut, dass sich Teilstücke des Netzwerkes ergeben, deren Ein- und Ausflüsse gemessen werden können. Diese Teilstücke sollten ein gemeinsames Element besitzen. Die Teilstücke sollen sich überlagern und gemeinsame Durchflussmesser aufweisen. Derartige Teilstücke werden als virtuelle Zonen oder virtuelle DMAs bezeichnet.

Eine weitere vorteilhafte Ausgestaltung der Erfindung liegt darin, dass die Messperiode beispielsweise von 2.00 bis 4.00 Uhr, von 0.00 bis 24.00 Uhr und/oder von 6.00 bis 18.00 Uhr ist. Bei einer Night Flow Analysis wird über alle Durchflussmesser bzw. Sensoren nachts, beispielsweise zwischen 2:00 und 4:00 der Durchfluss im Rahmen einer derartigen Analyse gemessen, d.h. während üblicherweise verbrauchsarmen Zeiten. Anstelle einer Untersuchung bei Nacht kann man für Integrated Flow Untersuchungen andere Zeitintervalle, beispielsweise 24 Stunden oder mehrere Messzeiträume während eines Tages betrachten.

Eine weitere vorteilhafte Ausgestaltung der Erfindung liegt darin, dass der Schritt e) Bestimmen der zufälligen Verbräuche der in den Gebieten (DMA) angeschlossenen Verbraucher durch die Abfolge folgender Verfahrensschritte erfolgt:

1. Klassifizieren der Verbraucher auf Basis eines zugeordneten durchschnittlichen Tagesverbrauchs;

2. Ermitteln eines theoretischen Gesamtverbrauchs für jeden Verbraucher basierend auf dem jeweiligen durchschnittlichen Tagesverbrauchs und den innerhalb der festgelegten Messperiode ermittelten Verbrauchs;

3. Festlegen einer Wassermenge Q, die deutlich kleiner ist, als der minimale Wasserverbrauch in einem Gebiet (DMA)und setzen des Verbrauchs für alle Verbraucher im Versorgungsnetz auf 0 (Initialisierung);

4. Aufteilen der festgelegten Messperiode in Zeitspannen und Messen des Gesamtverbrauches pro Gebiet (DMA) in jeder Zeitspanne;

5. Zufälliges Auswählen von Verbraucher für jede Zeitspanne und Erhöhen des Verbrauchs der zufällig ausgewählten Verbraucher in einer jeweiligen Zeitspanne um die festgelegte Wassermenge Q;

6. Solange der gesamte für einen Beobachtungszeitraum verteilt Wasserverbrauch kleiner ist, wie der in 4) bestimmte, gehe zu 5);

7. Wiederhole ab 4) bis alle Zeitspannen abgearbeitet sind.

Mit diesem Algorithmus wird die Verteilung des Verbrauchs beschrieben. Mit diesem Verbrauch wird eine hydraulische Simulation des Netzabschnitts durchgeführt. Für eine hydraulische Simulation müssen Randbedingungen so gesetzt werden, dass das physikalische Modell sinnvoll beschrieben wird: Wenn die Zone nur einen Zu-/Abfluss besitzt, so wird an dieser Stelle ein konstanter Druck gesetzt, hat sie mehrere Zu- und Abflüsse so wird an einem ein konstanter Druck gesetzt und an den anderen die gemessene Zu- und Abflüsse. Somit stimmt die Massenbilanzierung im Modell.

Eine weitere vorteilhafte Ausgestaltung der Erfindung liegt darin, dass der Schritt e) Bestimmen der zufälligen Verbräuche der in den Gebieten (DMA) angeschlossenen Verbraucher durch die Abfolge folgender Verfahrensschritte erfolgt:

I. Festlegen von n Verbrauchsknoten im Versorgungsnetz;

II. Festlegen einer Quantummenge Q die deutlich kleiner ist als der minimale Wasserverbrauch in einem Gebiet (DMA);

III. Festlegen eines gemessenen Gesamtverbrauchs R (als ganzzahliges Vielfaches der Quantummenge Q;

IV. Festlegen der Summe G der Durchschnittsverbräuche V(n) aller Knoten;

Für alle Verbrauchsknoten n bis für jeden Knoten n der Wert X(n) bestimmt ist:

V. Wähle nächsten noch nicht abgefertigten Verbrauchsknoten n mit Durchschnittsverbrauch v(n);

Ziehe Zufallsvariable X(n) mit Wert zwischen 0 und R und Verteilung

$$P(X(n) = k) = V(n)^k * (G - V(n))^{(R-k)} * R! / (G^R * k! * (R-k)!);$$

Ersetze G durch G - V(n) und R durch R - X(n).

Alternativ kann die Verteilung der zufälligen Flüsse auf die Verbraucher auch mit dem dargestellten Algorithmus erfolgen, wenn bekannt ist, dass die Verbrauchsprofile der Verbraucher in einem Gebiet gleich sind. Dieser ist äquivalent zum ersten Verfahren, zeichnet sich aber durch eine niedrigere Laufzeit aus, da weniger Zufallszahlen gezogen werden.

Eine weitere vorteilhafte Ausgestaltung der Erfindung liegt darin, dass die Schritte e) und f) für ein festes Zeitintervall wiederholt werden und die Rechenergebnisse gemittelt werden, bevor der Vergleich gemäß Schritt g) stattfindet. Durch das Wiederholen wird ein Schwankungsbereich für die Rechenergebnisse gewonnen. Der Einfluss von Ausreissern wird dabei reduziert und das normale Verhalten des Gebietes kristallisiert sich heraus.

Eine weitere vorteilhafte Ausgestaltung der Erfindung liegt in der Verwendung eines Verfahrens nach einem der Ansprüche 1 bis 6, für ein Infrastrukturnetz zum Transport eines Fluids. Die Messwerte für Fluide lassen sich durch entsprechende Sensorik (z.B. Druck- oder Durchflusssensoren) leicht und genau ermitteln und somit für zuverlässige Prognosen verwenden.

Eine weitere vorteilhafte Ausgestaltung der Erfindung liegt darin, dass das Infrastrukturnetz ein Wasserversorgungs- oder ein Gasversorgungs- oder ein Fernwärmenetz ist. Die Erfindung ist anwendbar auf alle Infrastrukturnetze, bei denen Fluide transportiert und verbraucht werden. Beispiele für derartige Infrastrukturnetze sind Gasversorgungs- und Fernwärmenetze.

Eine weitere vorteilhafte Ausgestaltung der Erfindung liegt in einer computerunterstützten Vorrichtung zur Verwendung eines Verfahrens nach einem der Ansprüche 1 bis 5 zur Leckageerkennung in einem Gebiet eines Versorgungsnetzes, die Vorrichtung umfassend:

a) Sensoren zum Messen eines jeweiligen minimalen Zuflusses für jedes Gebiet (DMA) innerhalb einer festgelegten Messperiode;

b) Mittel zum Bestimmen des Wasserverbrauches für jedes Gebiet (DMA) innerhalb einer festgelegten Messperiode durch die installierten Sensoren;

c) Mittel zum Abbilden der Topologie des Versorgungsnetzes in einem hydraulischen Simulator und Erstellen eines hydraulischen Simulationsmodells für jedes Gebiet (DMA);

d) Mittel zum Bestimmen der Verbrauchsprofile der in den Gebieten (DMA) angeschlossenen Verbraucher;

e) Mittel zum Bestimmen des Fließverhaltens im Versorgungsnetz innerhalb der festgelegten Messperiode durch Monte-Carlo-Simulation; und

f) Mittel zum Bestimmen, ob eine Leckage vorliegt durch Vergleich der durch die Monte-Carlo-Simulation ermittelten Messwerte mit den von den Sensoren gelieferten Messwerten. Die Vorrichtung lässt sich mit handelsüblichen Mitteln herstellen. Z.B. ist die entsprechende Sensorik in entsprechenden Baumärkten erhältlich, die Mittel zum Abbilden der Topologie, zum Bestimmen der Verbrauchsprofile, zum Bestimmen des Fließverhaltens und die Mittel zum Vergleich der tatsächlichen Messwerte mit den durch die von der Monte-Carlo-Simulation ermittelten Messwerten lassen sich auf Personal Computern und entsprechender Software (z.B. Tabellenkalkulations- oder Mathematikprogramme, Simulationsprogramme) realisieren.

Eine weitere vorteilhafte Ausgestaltung der Erfindung liegt in einer Vorrichtung nach Anspruch 8, weiter umfassend Ausgabemittel zur Darstellung des Vergleiches der durch die Monte-Carlo-Simulation ermittelten Messwerte mit den von den Sensoren gelieferten Messwerten und/oder zur Darstellung von Indikatoren für eine Leckage. Durch eine grafische Darstellung können die Ergebnisse optisch verglichen werden und Abweichungen als Indikatoren für Leckagen leicht erkannt werden.

Eine weitere vorteilhafte Ausgestaltung der Erfindung liegt in einem computerunterstützten simulationsbasiertes Assistenzsystem zur Leckageerkennung in einem Gebiet eines Versorgungsnetzes, wobei durch stationär installierte Sensoren zum Messen eines minimalen Zuflusses des Gebietes innerhalb einer festgelegten Messperiode Versorgungsnetzes Messwerte erfasst und über eine Datenfernübertragung an eine Auswerteeinrichtung gesendet werden, wobei die Auswerteeinrichtung aufweist:

- Mittel zum Bestimmen des Wasserverbrauches für jedes Gebiet innerhalb einer festgelegten Messperiode durch die installierten Sensoren;
- Mittel zum Abbilden der Topologie des Versorgungsnetzes in einem hydraulischen Simulator und Erstellen eines hydraulischen Simulationsmodells für jedes Gebiet (DMA);
- Mittel zum Bestimmen der Verbrauchsprofile der in den Gebieten angeschlossenen Verbraucher;
- Mittel zum Bestimmen des Fließverhaltens im Versorgungsnetz innerhalb der festgelegten Messperiode durch Monte-Carlo-Simulation; und
- Mittel zum Vergleich der durch die Monte-Carlo-Simulation ermittelten Messwerte mit den von den Sensoren gelieferten Messwerten, um bei Abweichungen mögliche Leckagen in einem Gebiet zu erkennen. Das computergestützte Assistenzsystem lässt sich mit handelsüblichen Mitteln herstellen. z.B. ist die entsprechende Sensorik (z.B. Durchflussmesser) in entsprechenden Fachgeschäften erhältlich, die Mittel zum Berechnen lassen sich auf Personal Computern und entsprechender Software (z.B. Tabellenkalkulations-, Mathematik- oder Simulationsprogramme) realisieren. Beim Erkennen einer Leckage können durch das Assistenzsystem automatisch geeignete Gegenmaßnahmen (z.B. Stoppen des Zuflusses zu einem Gebiet, Einleiten von geeigneten Maßnahmen) eingeleitet oder für das Bedienpersonal vorgeschlagen werden. Das Assistenzsystem ist insbesondere geeignet für den Einsatz in einer Leitwarte zur Überwachung eines Versorgungsnetzes.

Ein Ausführungsbeispiel der Erfindung ist in der Zeichnung dargestellt und wird im Folgenden erläutert.

Dabei zeigen:

FIG 1    Ausführungsbeispiele für erfindungsgemäße Gebiete,

FIG 2    eine beispielhafte Prinzipdarstellung für ein Versorgungsnetz mit Assistenzsystem,

FIG 3    eine beispielhafte Darstellung von Sensormesswerten und berechneten Werten zur Erkennung einer Leckage, und

FIG 4    ein beispielhaftes Ablaufdiagramm zur Durchführung des erfindungsgemäßen Verfahrens.

Die Verringerung von Wasserverlusten stellt eine große Herausforderung an die Leckerkennung und Ortung in Wassernetzen dar. In Teilgebieten eines Netzes können Wasserverluste durch Durchflussmengenmessungen an allen Zu- und Abflüssen des Gebietes und Bildung einer Massenbilanz erkannt werden.

Solche Messungen überschreiten sowohl vom Aufwand wie auch von der Gesetzeslage (zeitgenaue Verbrauchsmessung und Aufzeichnung aller Kunden kann datenschutzrechtlich zu Problemen führen) die Grenzen der Machbarkeit. Nichts desto trotz ermöglichen neue günstigere Messgeräte die Überwachung physikalisch relevanter Werte wie Druck, Durchfluss etc.

Die vorliegende Erfindung stellt ein stochastisches Modell für Verbraucher in einem Versorgungsnetz vor, das es ermöglicht, mit einer hydraulischen Simulation eine netzweite Massenbilanz aufzustellen, um sowohl neue, als auch bereits bestehende Leckagen zu erkennen.

Die meist sehr großen Wasserversorgungsnetze werden in Wasserversorgungszonen (Gebiete) unterteilt.

Diese Gebiete können wiederum in Subzonen unterteilt werden, die - da durch britische Ingenieure geprägt - als District Meter Area (DMA) bezeichnet werden. Die DMAs werden so angelegt, dass sie jeweils nur einen Zufluss haben, dessen Durchfluss gemessen wird. Alternativ können statt physikalischen DMAs auch virtuelle Zonen verwendet werden, die mehrere Zu- und Abflüsse aufweisen können. Aus der Beobachtung der Durchflussmessung wird auf Unregelmäßigkeiten im Wasserverbrauch und somit auf Leckagen geschlossen. Konkret wird eine sog. Night Flow Analysis durchgeführt. Aus den minimalen Zuflusswerten wird eine DMA während verbrauchsarmen Nachtzeiten durchgeführt, z.B. zwischen 02:00 und 04:00 Uhr. Bei einem Wert pro Nacht wird über Tage und Wochen hinweg eine Zeitreihe erstellt. Der (plötzliche) Anstieg dieser minimalen Verbrauchswerte, der z.B. durch eine Schwellwertüberschreitung erkannt werden kann, kann als Ursache eine neue Leckage haben.

Besondere Ereignisse, wie der Einsatz von Rasensprenklern, Sportereignisse oder Brauchtum während der Nachtmessung verursachen somit einen Anstieg des minimalen Zuflusses in verschiedenen DMAs. Somit wird für alle DMAs Alarm ausgelöst. Bisher muss ein solcher möglicher Fehlalarm von dem Benutzer des Systems erkannt und durch weitere Untersuchungen ausgesondert werden. Die vorliegende Erfindung ermöglicht ein automatisches Verfahren zur Erkennung netzwerkübergreifender Ereignisse zur Reduktion von Fehlalarmen bei der Leckageanalyse.

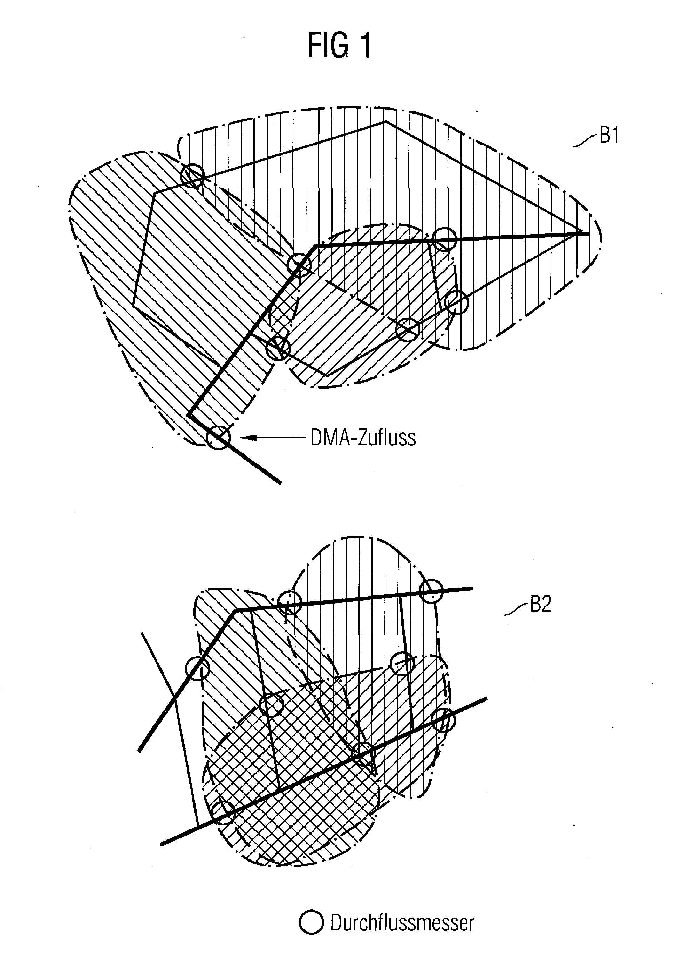

Figur 1 zeigt zwei Ausführungsbeispiele B1, B2 für erfindungsgemäße Gebiete DMA. Bei einem Gebiet DMA kann es sich um ein physikalisch räumliches Gebiet des Versorgungsnetzes handeln, oder um eine virtuelle Zone. Virtuelle district meter areas (virtuelle DMAs) unterscheiden sich von herkömmlichen Gebieten (DMAs) folgendermaßen. Bei der Unterteilung des Versorgungsnetzes in Gebiete (DMAs) wurde herkömmlicher Weise stets versucht, diese so zu bilden, das sich lediglich ein Zufluss bzw. ein Zuflussrohr ergab und dieses über einen einzigen Sensor überwacht werden kann. In den Versorgungszonen werden an ausgewählten Stellen zusätzliche Durchflusssensoren so eingebaut, dass sich Teilstücke des Netzwerkes ergeben, deren Ein- und Ausflüsse gemessen werden können. Diese Teilstücke sollten ein gemeinsames Element besitzen. Die Teilstücke sollen sich überlagern und gemeinsame Durchflussmesser aufweisen. Derartige Teilstücke werden als virtuelle Zonen oder virtuelle DMAs bezeichnet.

Mit der Vorgehensweise der Schaffung von virtuellen Zonen (virtuellen Gebieten) wird ein universelles Verfahren vorgestellt, Versorgungsnetze so zu unterteilen, das Teilgebiete, wie es beispielsweise ein oder mehrere Leitungsabschnitte ist/sind, mehrfach hinsichtlich der Leckageerkennung überwacht werden können. Die Überwachung einer jeden virtuellen Zone funktioniert nach dem gleichen Prinzip und kann in einer technischen Lösung entsprechend mehrfach angewendet werden. Die Unterteilung eines Netzwerkes in virtuelle Zonen liefert den Vorteil, dass bis auf den Einbau von Durchflussmessern, keine Änderung am bestehenden Netz vorgenommen werden müssen. Ein weiterer Vorteil besteht darin, dass ohne den Betrieb des Versorgungsnetzwerks zu stören, oder umständliche, kostenintensive Messungen vor Ort durchzuführen, die Leckageerkennung automatisiert ablaufen kann.

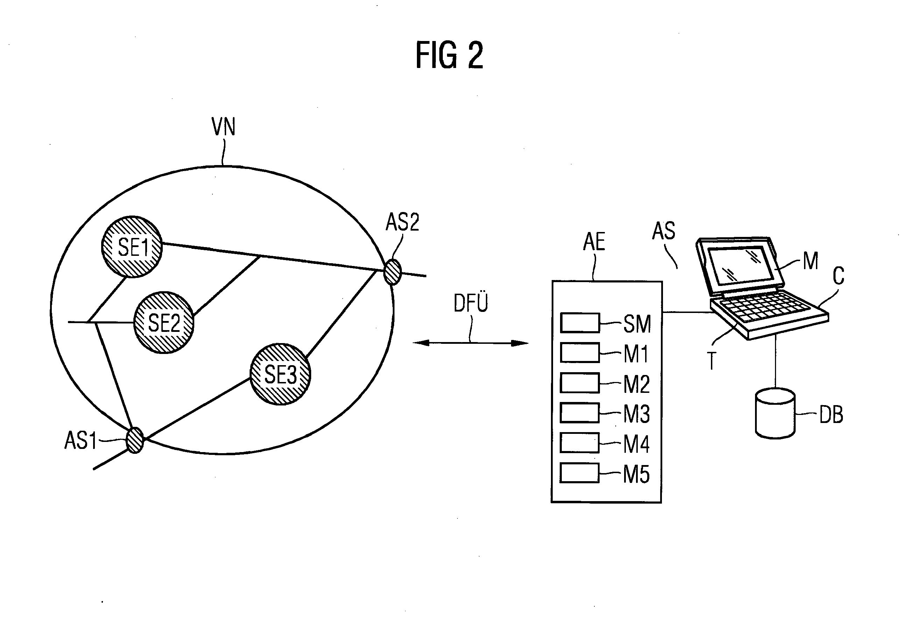

Figur 2 zeigt eine beispielhafte Prinzipdarstellung für ein Versorgungsnetz VN mit Assistenzsystem AS zur Überwachung des Versorgungsnetzes VN. Das Versorgungsnetz VN weist eine Sensorik auf, die über Datenfernübertragung DFÜ mit dem Assistenzsystem AS verbunden sind. Beim Assistenzsystem AS handelt es sich um ein computerunterstütztes simulationsbasiertes Assistenzsystem AS zur Erkennung von Leckagen im Versorgungsnetz VN. Durch stationär installierte Sensoren SE1-SE3 an hydraulisch ausgewählten Sensor-Mess-Stellen innerhalb eines Gebietes des Versorgungsnetzes VN werden reale Messwerte erfasst und über eine Datenfernübertragung DFÜ7 an eine Auswerteeinrichtung AE gesendet. Der Wasserverbrauch für ein Gebiet (DMA, FIG 1) oder des betrachteten Versorgungsnetzes VN wird innerhalb einer oder mehrerer festgelegter Messperioden durch die Durchflussmessgeräte AS1, AS2 an den Zu- und Abflüssen des Gebietes bzw. Versorgungsnetzes bestimmt. Auch die Messwerte der Sensoren AS1, AS2 können über eine Datenfernübertragung DFÜ7 an eine Auswerteeinrichtung AE gesendet werden. In der Auswerteeinrichtung AE werden die realen Messwerte mit Werten, die durch eine Monte-Carlo-Simulation errechnet wurden verglichen. Abweichungen deuten auf das Vorliegen einer Leckage hin. Das Verfahren kann prinzipiell auf Gebietsebene oder auf Versorgungsnetzebene durchgeführt werden.

Insbesondere umfasst die Auswerteeinrichtung AE Mittel M1 zum Bestimmen des Wasserverbrauches für jedes Gebiet DMA innerhalb einer festgelegten Messperiode durch die installierten Sensoren, Mittel M2 zum Abbilden der Topologie des Versorgungsnetzes in einem hydraulischen Simulator und Erstellen eines hydraulischen Simulationsmodells für jedes Gebiet DMA, Mittel M3 zum Bestimmen der Verbrauchsprofile der in den Gebieten DMA angeschlossenen Verbraucher, Mittel M4 zum Bestimmen des Fließverhaltens im Versorgungsnetz innerhalb der festgelegten Messperiode durch Monte-Carlo-Simulation, und Mittel M5 zum Vergleich der durch die Monte-Carlo-Simulation ermittelten Messwerte mit den von den Sensoren gelieferten Messwerten, um bei Abweichungen mögliche Leckagen in einem Gebiet DMA zu erkennen. Die Topologie des Versorgungsnetzes VN ist dabei in einem hydraulischen Simulator nachgebildet. Die Rohre werden mit den bekannten physikalischen Werten parametrisiert. Die Verbraucher an den Knoten des Netzwerks hingegen sind unbekannt. Dafür wird ein stochastisches Ersatzmodell aufgestellt.

Das computergestützte Assistenzsystem AS lässt sich mit handelsüblichen Mitteln herstellen. Z.B. ist die entsprechende Sensorik SE1 - SE3 (z.B. Durchflussmesser) in entsprechenden Fachgeschäften erhältlich, die Mittel zum Berechnen, Bestimmem, Vergleichen lassen sich auf Personal Computern C und entsprechender Software (z.B. Tabellenkalkulations-, Mathematik- oder Simulationsprogramme) realisieren. Für das Generieren von automatischen Gegenmaßnahmen oder für das Anzeigen von Maßnahmen für das Bedienpersonal kann das Assistenzsystem AS z.B. auf modellbasierten Techniken (z.B. CBR, Case Based Reasoning) basieren. Abweichungen der realen und der erwarteten Werte (Simulationsergebnisse) können an einer Ausgabeeinheit M (z.B. Bildschirm) eines Computers C angezeigt werden. Der Computer C umfasst weiterhin Speichermedien, z.B. eine Datenbank DB zur Speicherung bzw. Zwischenspeicherung der über die Datenfernübertragungsleitung DFÜ eintreffenden Messwerte der Sensoren SE1 - SE3.

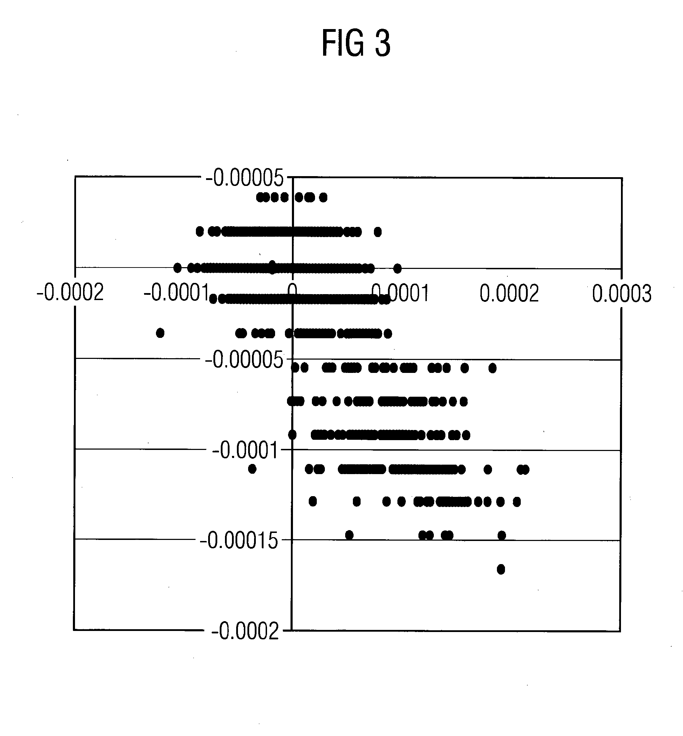

Figur 3 zeigt eine beispielhafte Darstellung von Sensormesswerten und berechneten Werten zur Erkennung einer Leckage. Hierzu werden die Messwerte von Sensoren, die innerhalb der betrachteten Zone (Gebiet, DMA) liegen, gegen die durch die Simulation berechneten Werte gezeichnet, wie in der Abbildung gemäß Figur 3 dargestellt. Die Abweichung der Ausgleichsgeraden durch die Punktwolke zur Identität ist ein Indikator dafür, dass das Modell nicht zu den Messungen passt, was auf eine Leckage hinweist. Es ist für den Fachmann klar, dass unterschiedliche Typen von Diagrammen für die Darstellung von Abweichungen verwendet werden können.

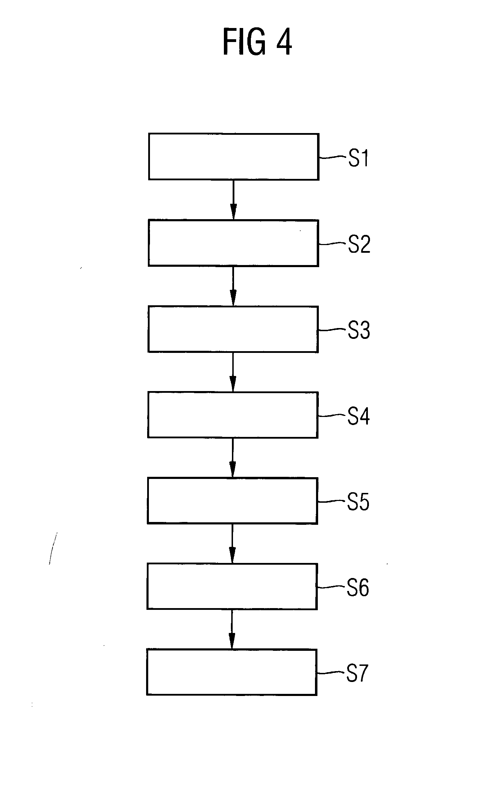

Figur 4 zeigt ein beispielhaftes Ablaufdiagramm zur Durchführung des erfindungsgemäßen Verfahrens. Dabei werden vorteilhafter weise die Schritte S1 - S7 computerunterstützt mit geeigneter Software (z.B. Tabellenkalkulationsprogrammen, Simulationsprogrammen), z.B. in einer Leitwarte durchgeführt.

In eine Zone/Gebiet (z.B. eine virtuelle DMA) mit bekanntem Zufluss werden zusätzliche Sensoren platziert, die nicht notwendig weitere Zonen oder (virtuelle) DMAs definieren. Wie bei der Leckageerkennung üblich wird wieder der Verbrauch in einer Zeitspanne mit niedrigem Verbrauch wie zum Beispiel von 2-4 Uhr betrachtet (night flow analysis). Für die Zone/Gebiet (z.B. eine virtuelle DMA) wird nun basierend auf den gemessenen Zufluss in die Zone (DMA) ein hydraulisches Modell aufgestellt. Hierzu wird die Topologie des Netzes in einem hydraulischen Simulator nachgebildet. Die Rohre werden mit den bekannten Werten parametrisiert. Die Verbraucher an den Knoten des Netzwerks hingegen sind unbekannt. Für dies wird wie folgt ein stochastisches Ersatzmodell aufgestellt:

Es wird für jeden Messzeitraum der Wasserverbrauch in der Zone zufällig auf alle Verbraucher verteilt. Die Verteilung des Verbrauchs wird in Algorithmus 1 beschrieben. Mit diesem Verbrauch wird eine hydraulische Simulation des Netzabschnitts durchgeführt. Für eine hydraulische Simulation müssen Randbedingungen so gesetzt werden, dass das physikalische Modell sinnvoll beschrieben wird: Wenn die Zone nur einen Zu-/Abfluss besitzt, so wird an dieser Stelle ein konstanter Druck gesetzt, hat sie mehrere Zu- und Abflüsse so wird an einem ein konstanter Druck gesetzt und an den anderen die gemessene Zu- und Abflüsse. Somit stimmt die Massenbilanzierung.

Mit einer Monte-Carlo-Simulation über verschiedene Ereignisse der zufälligen Verteilung der Messwerte werden für die berechneten Sensorwerte der innern Sensoren der Zonen berechnet. Die Abweichung zwischen den gemessenen und berechneten Werten gibt Hinweise auf mögliche Leckagen.

Im Schritt S1 erfolgt das Aufteilen des Versorgungsnetzes in Gebiete (DMA) mit jeweils bekanntem Zufluss. Die kann computerunterstützt auf der Basis von Modellen des Netzes oder basierend auf Erfahrungswerten geschehen.

Im Schritt S2 erfolgt ein stationäres Installieren von Durchflussmessgeräten an Zu- und Abflüssen eines Gebietes (DMA). Beim Installieren der Sensorik kann auf schon installierte Sensoren zugegriffen werden, oder neue Sensoren werden abhängig vom Schneiden der Gebiete (DMA) installiert. Die Messwerte der Sensoren kann z.B. über DFÜ, Funk oder Satellitverbindung an eine Leitstelle zur Weiterverarbeitung gemeldet werden.

Im Schritt S3 erfolgt das Bestimmen des Wasserverbrauches für jedes Gebiet (DMA) innerhalb einer festgelegten Messperiode durch die Durchflussmessgeräte. Auch dies erfolgt vorteilhafter weise computerunterstützt.

Im Schritt S4 erfolgt das Abbilden der Topologie des Versorgungsnetzes in einem hydraulischen Simulator und Erstellen eines hydraulischen Simulationsmodells für jedes Gebiet (DMA). Auch dies erfolgt vorteilhafter weise automatisch und computerunterstützt.

Im Schritt S5 erfolgt das Bestimmen der zufälligen Verbräuche der in den Gebieten (DMA) angeschlossenen Verbraucher. Dies erfolgt vorteilhafter weise durch Softwareprogramme.

Im Schritt S6 erfolgt das Bestimmen des Fließverhaltens im Versorgungsnetz innerhalb der festgelegten Messperiode durch Monte-Carlo-Simulation. Die Monte-Carlo-Simulation erfolgt durch ein Simulationsprogramm.

Im Schritt S7 erfolgt das Bestimmen, ob eine Leckage vorliegt durch Vergleich der durch die Monte-Carlo-Simulation ermittelten Messwerte mit den von den Sensoren gelieferten Messwerten. Der Vergleich erfolgt computerunterstützt, Abweichungen, die Indikatoren für eine Leckage sein können, werden vorteilhafter weise grafisch dargestellt.

Anhand der Abweichungen können automatisch Gegenmaßnahmen eingeleitet werden (z.B. Schließen von Zulaufsventilen, Aktivieren von Umleitungen) oder mögliche Gegenmaßnahmen können für das Bedienpersonal einer Leitwarte vorgeschlagen werden.

Algorithmus 1 zur Bestimmung der zufälligen Verbräuche:

1) Klassifizieren der Verbraucher: Verschiedene Verbraucher haben ein unterschiedliches Vebrauchsprofil. Diese Profile geben an, wie sich der Tagesgesamtverbrauch eines Verbrauchers auf den Tag abbilden lässt. So haben Wohngebäude ein anderes Verbrauchsverhalten wie Bürogebäude, Schulen oder KMUs. Verbraucher, die sich nicht klassifizieren lassen, müssen exakt gemessen werden und werden in der weiteren Beschreibung vernachlässigt.

2) Aufgrund des durchschnittlichen Tagesverbrauchs eines jeden Verbrauchers, der zum Beispiel über die Jahresendabrechnung gewonnen wird, kann ein theoretischer Gesamtverbrauch in der Zone bestimmt werden. Hierzu wird für alle Verbraucher aufgrund ihres durchschnittlichen Tagesverbrauchs und ihres Verbrauchsprofil ein theoretischer Verbrauch während des Nachtmesszeitraums berechnet. Hieraus wird ein theoretischer Gesamtverbrauch berechnet.

3) Zur Initialisierung wird der Verbrauch aller Verbraucher für den gesamten Beobachtungszeitraum auf 0 gesetzt. Außerdem wird eine kleine Wassermenge Q festgelegt, die später verteilt wird (z.B. 31) diese sollte deutlich kleiner sein, als der minimale Wasserverbrauch in der Zone (DMA).

4) Für jede Zeitspanne des Messzeitraums (in der Regel 1-3 Minuten) wird der Gesamtverbrauch der Zone gemessen.

5) Es werden nun zufällig Verbraucher ausgewählt: Die Wahrscheinlichkeit einen Verbraucher zu wählen, ist sein Anteil am Gesamtverbrauch, wie er in 2) bestimmt wurde. Der Verbrauch des Verbrauchers wird für diese Zeitspanne um Q erhöht.

6) Solange der gesamte für den Beobachtungszeitraum verteilte Wasserverbrauch kleiner ist, wie der in 4) bestimmte, gehe zu 5)

7) Wiederhole ab 4) für die nächste Messspanne.

Es wird nun das Fließverhalten für den Zeitraum der Night Flow Analysis mit den oben konstruierten Zufallsverbrauch simuliert. Hierzu wird eine Monte Carlo Simulation (wie z.B. in Kurt Binder [u.a.], *Monte Carlo methods in statistical physics,* Springer, Berlin 1979 beschrieben) durchgeführt. Hierzu wird die Simulation für eine große Auswahl von zufälligen Verbräuchen, die wie oben beschrieben konstruiert werden, durchgeführt und von der großen Anzahl an Simulationswerten auf das Verhalten in der Zone geschlossen. Hierzu werden die Messwerte von Sensoren, die innerhalb der betrachteten Zone liegen, gegen die berechneten Werte gezeichnet, wie der folgenden Abbildung zu sehen ist. Die Abweichung der Ausgleichsgeraden durch die Punktwolke zur Identität ist ein Indikator dafür, dass das Modell nicht zu den Messungen passt, was auf eine Leckage hinweist (siehe Figur 3).
Alternativ kann die Verteilung der zufälligen Flüsse auf die Verbraucher auch mit folgendem Algorithmus 2 erfolgen. Dieser ist äquivalent zum oben beschriebenen Verfahren, zeichnet sich aber durch eine niedrigere Laufzeit aus, da weniger Zufallszahlen gezogen werden.
Algorithmus 2 zur Bestimmung der zufälligen Verbräuche:

Gegeben: Quantummenge Q
Initialisiere: R = gemessener Gesamtverbrauch (als ganzzahliges Vielfaches der Quantummenge Q)
G = Summe der Durchschnittsverbräuche V(n) aller Knoten

*Schleife durch die Knoten:*

- Wähle nächsten noch nicht abgefertigten Verbrauchsknoten n mit Durchschnittsverbrauch v(n).
- Ziehe Zufallsvariable X(n) mit Wert zwischen 0 und R und Verteilung

$$P(X(n) = k) = V(n)^k * (G - V(n))^{(R-k)} * R! / (G^R * k! * (R-k)!);$$

- Ersetze G durch G - V(n) und R durch R - X(n).
- Wähle nächsten Knoten bis für jeden Knoten n der Wert X(n) bestimmt ist.

Dieser Algorithmus ist bei identischem Verbrauchsprofilen aller Verbraucher anwendbar. Der Algorithmus erlaubt eine effiziente Berechnung.
Verfahren, Vorrichtung und Assistenzsystem zur Leckageerkennung in einem Gebiet eines Versorgungsnetzes wobei durch den Vergleich von realen von Sensoren gelieferten Messwerten mit Messwerten, die durch eine Monte-Carlo-Simulation ermittelten wurden, Leckagen erkannt werden. Das erfindungsgemäße Verfahren zur Leckageerkennung stellt insbesondere Unregelmäßigkeiten, die zum Beispiel auf Leckagen zurückführbar sind, aufgrund einer hydraulischen Analyse fest. Dadurch können bereits bestehende Leckagen erkannt werden. Außerdem kann das Verfahren auch auf temporär im Netz angebrachte Sensoren angewendet werden, was dem Netzbetreiber zusätzliche Freiheiten bei der Lecksuche gibt. Das Verfahren kann auch für andere Versorgungsnetze und Infrastrukturen angewendet werden.

Bezugszeichenliste

| B1, B2 | Beispiel |
| DMA | Gebiet |
| SE1 - SE3,AS1,AS2 | Sensor |
| DFÜ | Datenfernübertragung |
| AS | Assistenzsystem |
| AE | Auswerteeinrichtung |
| SM | Simulationsmodell |
| M1 - M5 | Mittel |
| T | Tastatur |
| M | Monitor |
| C | Computer |
| DB | Datenbank |
| S1 - S7 | Verfahrensschritt |

**Patentansprüche**

1. Computergestütztes Verfahren zur Leckageerkennung in einem Gebiet (DMA) eines Versorgungsnetzes (VN) mit den Schritten:

    a) Stationäres Installieren von Durchflussmessgeräten (AS1, AS2) an Zu- und Abflüssen des Gebietes (DMA);
    b) Installation von Sensoren (S1-S3) zur jeweiligen Bestimmung eines gemessenen Sensorwertes in Form eines Durchflusses oder eines Druckes im Versorgungsnetz innerhalb des Gebietes (DMA);
    c) Bestimmen von Verbrauchsprofilen für das Gebiet (DMA) innerhalb einer oder mehrerer festgelegter Messperioden durch die Durchflussmessgeräte (AS1, AS2) an den Zu- und Abflüssen und den Messwerten der Sensoren innerhalb des Gebietes (DMA);
    d) Abbilden der Topologie des Versorgungsnetzes (VN) in einem hydraulischen Simulator und Erstellen eines hydraulischen Simulationsmodells für das Gebiet (DMA) basierend auf den gemessenen Zufluss in das Gebiet (DMA);
    e) Bestimmen einer großen Auswahl an zufälligen Verbräuchen innerhalb des Gebietes (DMA) durch zufällige Festlegung anhand der Verbrauchsprofile und den gemessenen Zu- und Abflüssen des Gebietes (DMA);
    f) Bestimmung berechneter Sensorwerte für die Sensoren innerhalb des Gebietes (DMA)durch Monte-Carlo-Simulation über verschiedene Ereignisse, die auf der großen Auswahl an zufälligen Verbräuche basieren; und
    g) Bestimmen, ob eine Leckage vorliegt durch Vergleich der durch die Monte-Carlo-Simulation berechneten Sensorwerte mit den von den Sensoren innerhalb des Gebietes (DMA) gemessenen Sensorwerten.

2. Verfahren nach Anspruch 1,
**dadurch gekennzeichnet, dass** es sich bei dem Gebiet (DMA) auch um eine Virtuelle District Meter Area handeln kann.

3. Verfahren nach einem der vorstehenden Ansprüche,
**dadurch gekennzeichnet, dass** die Messperiode beispielsweise von 2.00 bis 4.00 Uhr, von 0.00 bis 24.00 Uhr und/oder von 6.00 bis 18.00 Uhr ist.

4. Verfahren nach einem der vorstehenden Ansprüche,
**dadurch gekennzeichnet, dass** der Schritt e) Bestimmen der Verbrauchsprofile der in den Gebieten (DMA) angeschlossenen Verbraucher durch die Abfolge folgender Verfahrensschritte erfolgt:

    1. Klassifizieren der Verbraucher auf Basis eines zugeordneten durchschnittlichen Tagesverbrauchs;

2. Ermitteln eines theoretischen Gesamtverbrauchs für jeden Verbraucher basierend auf dem jeweiligen durchschnittlichen Tagesverbrauchs und den innerhalb der festgelegten Messperiode ermittelten Verbrauchs;

3. Festlegen einer Wassermenge Q, die deutlich kleiner ist, als der minimale Wasserverbrauch in einem Gebiet (DMA)und setzen des Verbrauchs für alle Verbraucher im Versorgungsnetz auf 0 (Initialisierung);

4. Aufteilen der festgelegten Messperiode in Zeitspannen und Messen des Gesamtverbrauches pro Gebiet (DMA) in jeder Zeitspanne;

5. Zufälliges Auswählen von Verbraucher für jede Zeitspanne und Erhöhen des Verbrauchs der zufällig ausgewählten Verbraucher in einer jeweiligen Zeitspanne um die festgelegte Wassermenge Q;

6. Solange der gesamte für einen Beobachtungszeitraum verteilt Wasserverbrauch kleiner ist, wie der in 4) bestimmte, gehe zu 5);

7. Wiederhole ab 4) bis alle Zeitspannen abgearbeitet sind.

5. Verfahren nach einem der Ansprüche 1 bis 3, geeignet für die Verwendung bei einheitlichen Verbraucherprofilen, **dadurch gekennzeichnet, dass** der Schritt e) Bestimmen der Verbrauchsprofile der in den Gebieten (DMA) angeschlossenen Verbraucher durch die Abfolge folgender Verfahrensschritte erfolgt:

1. Festlegen von n Verbrauchsknoten im Versorgungsnetz;

2. Festlegen einer Quantummenge Q die deutlich kleiner ist als der minimale Wasserverbrauch in einem Gebiet (DMA);

3. Festlegen eines gemessenen Gesamtverbrauchs R (als ganzzahliges Vielfaches der Quantummenge Q;

4. Festlegen der Summe G der Durchschnittsverbräuche V(n) aller Knoten;

Für alle Verbrauchsknoten n bis für jeden Knoten n der Wert X(n) bestimmt ist:

5. Wähle nächsten noch nicht abgefertigten Verbrauchsknoten n mit Durchschnittsverbrauch v(n); Ziehe Zufallsvariable X(n) mit Wert zwischen 0 und R und Verteilung

$$P(X(n) = k) = V(n)^k * (G - V(n))^{(R-k)} * R! / (G^R * k! * (R-k)!);$$

Ersetze G durch G - V(n) und R durch R - X(n).

6. Verfahren nach einem der vorstehenden Ansprüche, wobei die Schritte e) und f) für ein festes Zeitintervall wiederholt werden und die Rechenergebnisse gemittelt werden, bevor der Vergleich gemäß Schritt g) stattfindet.

7. Verfahren nach einem der Ansprüche 1 bis 6, bei dem das Versorgungsnetzes (VN) ein Infrastrukturnetz zum Transport eines Fluids darstellt.

8. Verfahren nach Anspruch 7, wobei das Infrastrukturnetz ein Wasserversorgungs- oder ein Gasversorgungs- oder ein Fernwärmenetz ist.

9. Computergestützte Vorrichtung zur Leckageerkennung in einem Gebiet (DMA) eines Versorgungsnetzes (VN),

a) bei der Durchflussmessgeräten (AS1, AS2) an Zu- und Abflüssen des Gebietes (DMA)vorhanden sind;

b) bei der Sensoren (S1-S3) zur jeweiligen Bestimmung eines gemessenen Sensorwertes in Form eines Durchflusses oder eines Druckes im Versorgungsnetz innerhalb des Gebietes (DMA) vorhanden sind;

c) bei der Mittel zum Bestimmen von Verbrauchsprofilen für das Gebiet (DMA) innerhalb einer oder mehrerer festgelegter Messperioden durch die Durchflussmessgeräte (AS1, AS2) an den Zu- und Abflüssen und den Messwerten der Sensoren innerhalb des Gebietes (DMA) vorhanden sind;

d) bei der Mittel zum Abbilden der Topologie des Versorgungsnetzes (VN) in einem hydraulischen Simulator und Erstellen eines hydraulischen Simulationsmodells für das Gebiet (DMA) basierend auf den gemessenen Zufluss in das Gebiet (DMA) vorhanden sind;

e) bei der Mittel zum Bestimmen einer großen Auswahl an zufälligen Verbräuchen innerhalb des Gebietes (DMA) durch zufällige Festlegung anhand der Verbrauchsprofile und den gemessenen Zuund Abflüssen des Gebietes (DMA) vorhanden sind,

f) bei der Mittel zur Bestimmung berechneter Sensorwerte für die Sensoren innerhalb des Gebietes (DMA)durch Monte-Carlo-Simulation über verschiedene Ereignisse, die auf der großen Auswahl an zufälligen Verbräuche basieren vorhanden sind; und

g) bei der Mittel zum Bestimmen, ob eine Leckage vorliegt durch Vergleich der durch die Monte-Carlo-Simulation berechneten Sensorwerte mit den von den Sensoren innerhalb des Gebietes (DMA) gemessenen Sensorwerten vorhanden sind.

**Claims**

1. Computer-aided method for detecting leaks in an area (DMA) of a supply network (VN), having the steps of:

   a) installing flowmeters (AS1, AS2) in a stationary manner at inflows and outflows of the area (DMA);
   b) installing sensors (S1-S3) for respectively determining a measured sensor value in the form of a flow rate or a pressure in the supply network within the area (DMA);
   c) determining consumption profiles for the area (DMA) within one or more stipulated measuring periods by means of the flowmeters (AS1, AS2) at the inflows and outflows and the measured values from the sensors within the area (DMA);
   d) mapping the topology of the supply network (VN) in a hydraulic simulator and creating a hydraulic simulation model for the area (DMA) on the basis of the measured inflow into the area (DMA);
   e) determining a large selection of random consumptions within the area (DMA) by means of random stipulation using the consumption profiles and the measured inflows and outflows of the area (DMA);
   f) determining calculated sensor values for the sensors within the area (DMA) by means of Monte Carlo simulation using various events which are based on the large selection of random consumptions; and
   g) determining whether there is a leak by comparing the sensor values calculated by the Monte Carlo simulation with the sensor values measured by the sensors within the area (DMA).

2. Method according to Claim 1,
   **characterized in that** the area (DMA) may also be a virtual district meter area.

3. Method according to one of the preceding claims,
   **characterized in that** the measuring period is, for example, from 2:00 to 4:00, from 0:00 to 24:00 and/or from 6:00 to 18:00.

4. Method according to one of the preceding claims, **characterized in that** step e) of determining the consumption profiles of the consumers connected in the areas (DMA) is carried out using the sequence of the following method steps:

   1. classifying the consumers on the basis of an associated average daily consumption;
   2. determining a theoretical total consumption for each consumer on the basis of the respective average daily consumption and the consumption determined within the stipulated measuring period;
   3. stipulating a quantity of water Q which is considerably smaller than the minimum water consumption in an area (DMA) and setting the consumption to 0 (initialization) for all consumers in the supply network;
   4. dividing the stipulated measuring period into periods of time and measuring the total consumption per area (DMA) in each period of time;
   5. randomly selecting consumers for each period of time and increasing the consumption of the randomly selected consumers by the stipulated quantity of water Q in a respective period of time;
   6. go to 5) as long as the total water consumption distributed for an observation period is smaller than the consumption determined in 4);
   7. repeat steps from 4) until all periods of time have been processed.

5. Method according to one of Claims 1 to 3, which is suitable for use with uniform consumer profiles,
   **characterized in that** step e) of determining the consumption profiles of the consumers connected in the areas (DMA) is carried out using the sequence of the following method steps:

   1. stipulating n consumption nodes in the supply network;
   2. stipulating a quantum quantity Q which is considerably smaller than the minimum water consumption in an area (DMA);
   3. stipulating a measured total consumption R as an integer multiple of the quantum quantity Q;
   4. stipulating the sum G of the average consumptions V(n) of all nodes;
   for all consumption nodes n, until the value X(n) is determined for each node n:

5. select the next consumption node n which has not yet been dealt with and has an average consumption v(n); pull the random variable X(n) with a value between 0 and R and the distribution $P(X(n) = k) = V(n)^k * (G - V(n))^{(R-k)} * R! / (G^R * k! * (R-k)!)$ ;
replace G with G - V(n) and R with R - X(n).

**6.** Method according to one of the preceding claims, steps e) and f) being repeated for a fixed interval of time and the calculation results being averaged before the comparison according to step g) takes place.

**7.** Method according to one of Claims 1 to 6, in which the supply network (VN) is an infrastructure network for transporting a fluid.

**8.** Method according to Claim 7, the infrastructure network being a water supply or a gas supply or a district heating network.

**9.** Computer-aided apparatus for detecting leaks in an area (DMA) of a supply network(VN),

a) in which flowmeters (AS1, AS2) are present at inflows and outflows of the area (DMA);
b) in which sensors (S1-S3) are present for respectively determining a measured sensor value in the form of a flow rate or a pressure in the supply network within the area (DMA);
c) in which means are present for determining consumption profiles for the area (DMA) within one or more stipulated measuring periods by means of the flowmeters (AS1, AS2) at the inflows and outflows and the measured values from the sensors within the area (DMA);
d) in which means are present for mapping the topology of the supply network (VN) in a hydraulic simulator and creating a hydraulic simulation model for the area (DMA) on the basis of the measured inflow into the area (DMA);
e) in which means are present for determining a large selection of random consumptions within the area (DMA) by means of random stipulation using the consumption profiles and the measured inflows and outflows of the area (DMA);
f) in which means are present for determining calculated sensor values for the sensors within the area (DMA) by means of Monte Carlo simulation using various events which are based on the large selection of random consumptions; and
g) in which means are present for determining whether there is a leak by comparing the sensor values calculated by the Monte Carlo simulation with the sensor values measured by the sensors within the area (DMA).

## Revendications

**1.** Procédé informatisé pour la détection de fuites dans un secteur (DMA) d'un réseau de distribution (VN), comprenant les étapes suivantes :

a) installer de façon permanente des débitmètres (AS1, AS2) placés au niveau de flux entrants et sortants du secteur (DMA);
b) l'installation de capteurs (S1-S3) servant à la détermination respective d'une valeur de capteur mesurée, se présentant sous la forme d'un débit ou d'une pression dans le réseau de distribution à l'intérieur du secteur (DMA);
c) déterminer des profils de consommation pour le secteur (DMA) à l'intérieur d'une ou de plusieurs périodes de mesure définies par les débitmètres (AS1, AS2) placés au niveau des flux entrants et sortants, et déterminer les valeurs mesurées des capteurs à l'intérieur du secteur (DMA);
d) représenter la topologie du réseau de distribution (VN) dans un simulateur hydraulique et établir un modèle de simulation hydraulique pour le secteur (DMA), en se basant sur le flux entrant mesuré dans le secteur (DMA);
e) déterminer une importante sélection de consommations aléatoires à l'intérieur du secteur (DMA), par une définition stochastique à l'aide des profils de consommation et des flux entrants et sortants du secteur (DMA) ayant été mesurés;
f) la détermination de valeurs de capteurs calculées pour les capteurs à l'intérieur du secteur (DMA), par simulation Monte-Carlo concernant différents événements qui sont basés sur l'importante sélection de consommations stochastiques; et
g) déterminer si une fuite se produit, par comparaison des valeurs de capteurs calculées par la simulation Monte-Carlo, avec les valeurs de capteurs mesurées par les capteurs, à l'intérieur du secteur (DMA).

**2.** Procédé selon la revendication 1, **caractérisé en ce que**, concernant le secteur (DMA), il peut s'agir également d'un secteur de distribution mesuré virtuel.

**3.** Procédé selon l'une ou l'autre des revendications précédentes, **caractérisé en ce que** la période de mesure est par exemple de 2.00 à 4.00 heures, de 0.00 à 24.00 heures et/ou de 6.00 à 18.00 heures.

**4.** Procédé selon l'une quelconque des revendications précédentes, **caractérisé en ce que** l'étape e) consistant à déterminer les profils de consommation des consommateurs raccordés dans les secteurs (DMA) se produit par la succession des étapes de procédé suivantes :

1. Classifier les consommateurs sur la base d'une consommation journalière moyenne associée;
2. Déterminer une consommation totale théorique pour chaque consommateur, en se basant sur la consommation journalière moyenne respective et sur la consommation déterminée à l'intérieur de la période de mesure définie;
3. Définir une quantité d'eau Q qui est nettement inférieure à la consommation d'eau minimale dans un secteur (DMA) et mettre à 0 (initialisation) la consommation pour tous les consommateurs dans le réseau de distribution;
4. Diviser la période de mesure définie en périodes de temps et mesurer la consommation totale, par secteur (DMA), dans chaque période de temps;
5. Sélection stochastique de consommateurs pour chaque période de temps et augmentation, correspondant à la quantité d'eau définie Q, dans une période de temps respective, de la consommation des consommateurs sélectionnés de façon stochastique;
6. Aussi longtemps que la consommation d'eau totale, répartie pour un espace de temps d'observation, est inférieure, comme celle déterminée dans 4), aller à 5);
7. Répéter à partir de 4), jusqu'à ce que toutes les périodes de temps soient traitées.

**5.** Procédé selon l'une quelconque des revendications 1 à 3, approprié pour l'utilisation concernant des profils de consommateurs homogènes, **caractérisé en ce que** l'étape e) consistant à déterminer les profils de consommation des consommateurs raccordés dans les secteurs (DMA) se produit par la succession d'étapes de procédé suivantes :

1. Définition de n noeuds de consommation dans le réseau de distribution;
2. Définition d'un quantum Q qui est nettement inférieur à la consommation d'eau minimale dans un secteur (DMA);
3. Définition d'une consommation totale mesurée R (comme multiple entier du quantum Q);
4. Définition de la somme G des consommations moyennes V(n) de tous les noeuds;
La valeur X(n) est déterminée pour tous les noeuds de consommation n, y compris pour chaque noeud n :
5. Sélectionner le noeud de consommation n suivant pas encore traité avec la consommation moyenne v(n);
Extraire une variable stochastique X(n) ayant une valeur comprise entre 0 et R et répartition

$$P(X(n) = k) = V(n)^k * (G - V(n))^{(R-k)} * R! / (G^R * k! * (R-k)!);$$

Remplacer G par G - V(n) et R par R - X(n).

**6.** Procédé selon l'une quelconque des revendications précédentes, où les étapes e) et f) sont répétées pour un intervalle de temps fixe et l'on fait la moyenne des résultats de calcul, avant de procéder à la comparaison selon l'étape g).

**7.** Procédé selon l'une quelconque des revendications 1 à 6, dans lequel le réseau de distribution (VN) représente un réseau d'infrastructure pour le transport d'un fluide.

**8.** Procédé selon la revendication 7, où le réseau d'infrastructure est un réseau de distribution d'eau ou de distribution de gaz ou de chauffage urbain.

**9.** Dispositif informatisé pour la détection de fuites dans un secteur (DMA) d'un réseau de distribution (VN),

a) dans lequel il existe des débitmètres (AS1, AS2) placés au niveau de flux entrants et sortants du secteur (DMA);
b) dans lequel il existe des capteurs (S1-S3) servant à la détermination respective d'une valeur de capteur mesurée, se présentant sous la forme d'un débit ou d'une pression dans le réseau de distribution, à l'intérieur du secteur (DMA);

c) dans lequel il existe des moyens servant à déterminer des profils de consommation pour le secteur (DMA), à l'intérieur d'une ou de plusieurs périodes de mesure définies par les débitmètres (AS1, AS2) placés au niveau des flux entrants et sortants, et à déterminer les valeurs mesurées des capteurs à l'intérieur du secteur (DMA);

d) dans lequel il existe des moyens servant à représenter la topologie du réseau de distribution (VN) dans un simulateur hydraulique, et à établir un modèle de simulation hydraulique pour le secteur (DMA), en se basant sur le flux entrant mesuré dans le secteur (DMA);

e) dans lequel il existe des moyens servant à déterminer une importante sélection de consommations stochastiques à l'intérieur du secteur (DMA), par une définition stochastique à l'aide des profils de consommation et des flux entrants et sortants du secteur (DMA) ayant été mesurés;

f) dans lequel il existe des moyens servant à la détermination de valeurs de capteurs calculées pour les capteurs à l'intérieur du secteur (DMA), par simulation Monte-Carlo concernant différents événements qui sont basés sur l'importante sélection de consommations stochastiques; et

g) dans lequel il existe des moyens servant à déterminer si une fuite se produit, par comparaison des valeurs de capteurs calculées par la simulation Monte-Carlo, avec les valeurs de capteurs mesurées par les capteurs, à l'intérieur du secteur (DMA).

## FIG 1

B1

DMA-Zufluss

B2

⭕ Durchflussmesser

FIG 2

EP 2 691 756 B1

# FIG 3

# FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• US 7920983 B1, PELEG AMIR